# EUROPÄISCHE PATENTANMELDUNG

(11) **EP 1 480 063 A2**
(43) Veröffentlichungstag der Anmeldung: **24.11.2004**
(21) Anmeldenummer: 04090169.6
(22) Anmeldetag: 29.04.2004
(51) Int. Cl.: G02B 6/42

(54) **Optoelektronische Sende- und/oder Empfangsanordnungen**

(30) Priorität: 19.05.2003 DE 10322757
(71) Anmelder: Infineon Technologies AG, 81669 München (DE)
(72) Erfinder: Killer, Thomas, 93155 Hohenschambach (DE); Althaus, Hans-Ludwig, 93138 Lappersdorf (DE); Wittl, Josef, 92331 Parsberg (DE); Hartl, Alfred, 93186 Pettendorf (DE); Weberpals, Frank, 93047 Regensburg (DE)
(74) Vertreter: Müller, Wolfram Hubertus, Dipl.-Phys.

(57) **Zusammenfassung**

Die Erfindung betrifft optoelektronische Sende- und/oder Empfangsanordnungen mit einem oberflächenmontierbaren opto-elektronischen Bauelement (1) und einer mit elektrischen Leitungen versehenen Schaltungsplatine (2), auf der das optoelektronische Bauelement (1) oberflächenmontiert ist, wobei die optische Achse (5) des opto-elektronischen Bauelements (1) senkrecht zur Ebene der Schaltungsplatine (2) verläuft. In einer Erfindungsvariante ist eine Haltevorrichtung (3) zur Aufnahme und Ausrichtung eines mit dem opto-elektronischen Bauelement (1) zu koppelnden Lichtwellenleiters (4) vorgesehen, die sich unmittelbar an die der Schaltungsplatine (2) abgewandte Seite (12) des opto-elektronischen Bauelements (1) anschließt. In einer andere Erfindungsvariante weist die Schaltungsplatine eine Aussparung auf und erfolgt eine Lichtein- oder auskopplung in bzw. aus dem opto-elektronischen Bauelement in Richtung der Aussparung der Schaltungsplatine.

## Beschreibung

Bezeichnung der Erfindung: Optoelektronische Sende- und/oder Empfangsanordnungen.

Die Erfindung betrifft optoelektronische Sende- und/oder Empfangsanordnungen mit einem oberflächenmontierbaren opto-elektronischen Bauelement. Sie ermöglicht insbesondere ein kostengünstiges mechanisches und optisches Koppeln einer Lichtleitfaser an das SMD-Gehäuse eines oberflächenmontierbaren opto-elektronischen Bauelements.

Aus der DE 199 09 242 A1 ist ein opto-elektronisches Modul bekannt, bei dem ein Leadframe mit einem opto-elektronischen Wandler in einem Modulgehäuse positioniert und mit einem lichtdurchlässigen, formbaren Material vergossen wird. Eine Lichtein- oder Auskopplung erfolgt über eine Lichtleitfaser, die an einem Stutzen des Modulgehäuses angekoppelt wird. Auf dem Leadframe befindet sich auch der Treiberbaustein bzw. Empfangsbaustein für den opto-elektronischen Wandler.

Es besteht ein Bedarf nach opto-elektronischen Sende- und/oder Empfangsanordnungen, bei denen die Sendebauelemente bzw. Empfangsbauelemente in oberflächenmontierbaren Bauteilen (SMD - Surface Mounted Device) angeordnet und dementsprechend in einfacher Weise unter Einsatz der Standards der SMD-Technologie auf einer Leiterplatte montiert werden können.

Dementsprechend liegt der vorliegenden Erfindung die Aufgabe zu Grunde, opto-elektronische Sende- und/oder Empfangsanordnungen zur Verfügung zu stellen, die auch bei einer Verwendung von SMD-Bauteilen für die opto-elektronischen Komponenten eine sichere Ankopplung eines Lichtwellenleiters ermöglicht und sich dabei durch einen kompakten und kostengünstigen Aufbau auszeichnen.

Diese Aufgabe wird erfindungsgemäß durch eine opto-elektronische Sende- und/oder Empfangsanordnung mit den Merkmalen des Anspruchs 1 und eine opto-elektronische Sende- und/oder Empfangsanordnung mit den Merkmalen des Anspruchs 18 gelöst. Bevorzugte und vorteilhafte Ausgestaltungen der Erfindung sind in den Unteransprüchen angegeben.

Danach zeichnet sich die erfindungsgemäße Lösung in einem ersten Erfindungsaspekt durch eine Anordnung aus, die aus einem oberflächenmontierbaren opto-elektronischen Bauelement, einer Haltevorrichtung zur Aufnahme und Ausrichtung eines mit dem opto-elektronischen Bauelement zu koppelnden Lichtwellenleiters und einer mit elektrischen Leitungen versehenen Schaltungsplatine, auf der das opto-elektronische Bauelement oberflächenmontiert ist, besteht. Dabei verläuft die optische Achse des oberflächenmontierbaren opto-elektronischen Bauelements senkrecht zur Ebene der Schaltungsplatine und schließt die Haltevorrichtung sich unmittelbar an die der Schaltungsplatine abgewandte Seite des opto-elektronischen Bauelements an.

Die Erfindung stellt einen kompakten Aufbau bereit, der eine optische und mechanische Ankopplung eines Lichtwellenleiters an ein oberflächenmontierbares opto-elektronischen Bauelement erlaubt. Das oberflächenmontierbare Bauelement entspricht dabei dem SMD (Surface Mounted Device)-Standard. Es kann auf standardisierte und hochautomatisierte Herstellungsverfahren zurückgegriffen werden, so dass auch eine kostengünstige Lösung vorliegt.

Bevorzugt weist die Haltevorrichtung eine Aufnahmeöffnung für einen Lichtwellenleiter auf, die parallel zur optischen Achse des opto-elektronischen Bauteils verläuft, d.h. die Längsachse der Aufnahmeöffnung liegt auf der optischen Achse des opto-elektronischen Bauteils. Die optische Achse des opto-elektronischen Bauteils wird dabei durch die optische Achse eines opto-elektronischen Wandlers bestimmt, den das Bauteil enthält. Dabei ist bevorzugt vorgesehen, dass die Aufnahmeöffnung sich bis an die der Schaltungsplatine abgewandte Seite des opto-elektronischen Bauelements erstreckt, so dass ein eingesteckter Lichtwellenleiter unmittelbar an der entsprechenden Seite des optoelektronischen Bauelements zur Anlage kommt. Es kann des weiteren vorgesehen sein, dass ein anzukoppelnder Lichtwellenleiter über eine vorher angebrachte Hülse an der Haltevorrichtung befestigt ist. Die Hülse ist fest mit dem Lichtwellenleiter verbunden. Es handelt sich beispielsweise um ein Metallinsert oder eine Kunststoffhülse.

In einer bevorzugten Ausgestaltung weist das oberflächenmontierbare opto-elektronische Bauelement ein Gehäuse mit passiven Justagestrukturen auf, die mit entsprechenden passiven Justagestrukturen der Haltevorrichtung zusammenwirken.

In einer vorteilhaften Ausgestaltung ist die Haltevorrichtung fest mit der Schaltungsplatine verbunden, insbesondere in der Schaltungsplatine verankert oder mit dieser verklebt oder an diese angespritzt. Beispielsweise ist die Haltevorrichtung über Spreizteile form- und/oder kraftschlüssig in der Schaltungsplatine verankert. Eine feste Verbindung der Haltevorrichtung mit der Schaltungsplatine weist den Vorteil auf, dass auftretende Kräfte auf die Schaltungsplatine abgeleitet werden und nicht von dem optoelektronischen Bauelement selbst aufgenommen werden müssen.

Es liegt jedoch ebenso im Rahmen der vorliegenden Erfindung, dass die Haltevorrichtung direkt an dem Gehäuse des opto-elektronischen Bauelements befestigt, beispielsweise mit diesem verklebt oder an dieses angespritzt ist. Die Verbindung kann lösbar oder nicht lösbar sein.

In einer bevorzugten Ausgestaltung der Erfindung ist vorgesehen, dass das opto-elektronische Bauelement Raststrukturen aufweist, die eine (lösbare oder nicht lösbare) Verrastung der Haltevorrichtung am opto-elektronischen Bauelement ermöglichen. Entsprechende Rastmittel sind auch an der Haltevorrichtung vorgesehen. Beispielsweise sind Bauelement und Haltevorichtung mittels einer Clip-Verbindung miteinander verbindbar. Raststrukturen können beispielsweise als Nut oder andere Struktur im Kunststoffkörper oder im Leadframe des opto-elektronischen Bauelements ausgebildet sein.

Auch ein anzukoppelnder Lichtwellenleiter ist bevorzugt rastbar mit der Haltevorrichtung verbunden. Für diesen Fall weist die Haltevorrichtung Rastmittel auf, die eine Verrastung eines Lichtwellenleiters in der Haltevorrichtung ermöglichen. Statt oder ergänzend zu Rastmitteln kann beispielsweise auch vorgesehen sein, dass die Haltevorrichtung eine elastische Wand aufweist, die einen anzukoppelnden Lichtwellenleiter kraftschlüssig aufnimmt. Grundsätzlich kann auch die Verbindung zwischen Lichtwellenleiter und Koppelvorrichtung lösbar oder nicht lösbar sein.

Die Haltevorrichtung weist in einer bevorzugten Ausgestaltung einen Aufnahmebereich für einen Lichtwellenleiter auf, der unter einem Winkel zur optische Achse des opto-elektronischen Bauelements verläuft, sowie integrierte Umlenkmittel, durch die das einzukoppelnde Licht auf die optische Achse des opto-elektronischen Bauelements umgelenkt wird. Besonders bevorzugt verläuft der Aufnahmebereich parallel zur Schaltungsplatine und lenken die integrierten Umlenkmittel das Licht um 90° um, so dass eine Lichtein- oder auskopplung parallel zur Leiterplatte erfolgen kann.

In einer bevorzugten Ausbildung der Erfindung ist die Verbindung von opto-elektronischem Bauelement und Haltevorrichtung vormontiert, wobei die Verbindung wiederum eine SMD-Komponente darstellt. Dies erlaubt eine kostengünstige automatisierte SMD-Montage der vormontierten Einheit von Bauelement und Haltevorrichtung.

Die elektrische Anbindung des oberflächenmontierbaren opto-elektronischen Bauelements an die Schaltungsplatine erfolgt bevorzugt entsprechend dem SMD-Standard, so dass wiederum auf vorhandene Standard-Technologien zurückgegriffen werden kann.

In einer vorteilhaften Ausgestaltung ist in das oberflächenmontierbare opto-elektronische Bauelement und/oder die Haltevorrichtung ein lichtveränderndes Element, insbesondere eine Linse oder ein Filterglas integriert. Dies ermöglicht eine effektive Lichtein- bzw. auskopplung.

Die erfindungsgemäße Lösung zeichnet sich in einem zweiten Erfindungsaspekt durch einen Anordnung aus, die aus einem oberflächenmontierbaren opto-elektronischen Bauelement und einer mit elektrischen Leitungen versehenen Schaltungsplatine, auf der das opto-elektronischen Bauelement oberflächenmontiert ist, besteht. Dabei verläuft die optische Achse des opto-elektronischen Bauelements senkrecht zur Ebene der Schaltungsplatine und weist die Schaltungsplatine eine Aussparung auf, wobei und eine Lichtein- oder auskopplung in bzw. aus dem opto-elektronischen Bauelement in Richtung der Aussparung der Schaltungsplatine erfolgt.

Diese Ausgestaltung ermöglicht eine kostengünstige und einfache optische Kopplung eines mit der aktiven Seite nach unten auf einer Schaltungsplatine angeordneten oberflächenmontierbaren opto-elektronischen Bauelements.

In einer bevorzugten Ausgestaltung dieser Erfindungsvariante ist in der Aussparung ein Lichtwellenleiter angeordnet, in den Licht ein- oder ausgekoppelt wird. Der Lichtwellenleiter kommt bevorzugt unmittelbar an der der Schaltungsplatine zugewandten Seite des opto-elektronischen Bauelements zur Anlage, so dass eine unmittelbare Lichtkopplung stattfindet.

Auch hier können ggf. zusätzlich lichtformende Elemente oder Filter vorgesehen sein.

Zur besseren und einfacheren Befestigung kann eine Hülse oder andere Vorrichtung vorgesehen sein, in der der Lichtwellenleiter angeordnet ist, wobei die Hülse bzw. Vorrichtung in die Aussparung der Schaltungsplatine eingesetzt ist.

In einer weiteren Ausgestaltung der zweiten Erfindungsvariante enthält die Schaltungsplatine mindestens einen Lichtwellenleiter und sind in der Aussparung der Schaltungsplatine Mittel zum Umlenken des Lichts um 90° angeordnet.

Die Umlenkmittel sind bevorzugt durch ein Einsteckteil mit einer schräg verlaufenden Fläche gebildet, das in die Aussparung der Schaltungsplatine eingesteckt ist. Alternativ sind die Umlenkmittel an einem in die Aussparung der Schaltungsplatine hineinragenden Bereich des entsprechenden Lichtwellenleiters ausbildet. Dabei weist der hineinragende Bereich des Lichtwellenleiters bevorzugt eine schrägverlaufende Stirnfläche auf.

Die Anordnung des Lichtwellenleiters an der Schaltungsplatine kann auch vielfache Weise erfolgen. In einer ersten Ausgestaltung ist der Lichtwellenleiter in eine Nut, insbesondere V-Nut der Schaltungsplatine eingelegt und dort verklebt. Die Nut ist beispielsweise durch Fräsen in die Schaltungsplatine eingebracht. In einer zweiten Ausgestaltung ist der Lichtwellenleiter in die Schaltungsplatine eingepresst, bevorzugt zu einem Zeitpunkt, in dem eine aus Kunststoff bestehende Schaltungsplatine noch nicht ausgehärtet ist. In einer dritten Ausgestaltung ist der Lichtwellenleiter als ein in die Schaltungsplatine integrierter wellenleitender Kanal ausgebildet.

Das oberflächenmontierbare opto-elektronische Bauelement ist bevorzugt eine Sendevorrichtung, insbesondere eine Laserdiode oder eine Leuchtdiode, und/oder eine Empfangsvorrichtung, insbesondere eine Photodiode, die in einem SMD-Chip angeordnet sind. Das oberflächenmontierbare opto-elektronische Bauelement kann zusätzlich elektrische Komponenten wie eine Treibervorrichtung, einen Vorverstärker oder Kondensatoren aufweisen.

Die Erfindung wird nachfolgend unter Bezugnahme auf die Figuren der Zeichnung anhand mehrerer Ausführungsbeispiele näher erläutert. Es zeigen:
- Figur 1 -: ein erstes Ausführungsbeispiel einer opto-elektronischen Sende- und/oder Empfangsanordnung mit einem oberflächenmontierbaren opto-elektronischen Bauelement, einer Haltevorrichtung zur Aufnahme und Ausrichtung eines Lichtwellenleiters und einer Schaltungsplatine, wobei die Haltevorrichtung in der Schaltungsplatine verankert ist;
- Figur 2a -: eine Draufsicht auf ein oberflächenmontierbares opto-elektronisches Bauelement und eine zugehörige Haltevorrichtung gemäß einem zweiten Ausführungsbeispiel einer Sende- und/oder Empfangsanordnung;
- Figur 2b -: eine Seitenansicht der Anordnung der Figur 2a;
- Figur 3a -: eine Draufsicht auf ein oberflächenmontierbares opto-elektronisches Bauelement und eine zugehörige Haltevorrichtung gemäß einem dritten Ausführungsbeispiel einer Sende- und/oder Empfangsanordnung;
- Figur 3b -: eine Seitenansicht der Anordnung der Figur 3a;
- Figur 4a -: eine Draufsicht auf ein obenflächenmontierbares opto-elektronisches Bauelement gemäß einem vierten Ausführungsbeispiel einer Sende- und/oder Empfangsanordnung;
- Figur 4b -: eine seitliche Schnittansicht des Bauelements der Figur 4a, wobei zusätzlich eine rastbar mit dem Bauelement verbindbare Haltevorrichtung mit integrierten Umlenkmitteln dargestellt ist;
- Figur 5 -: ein Ausführungsbeispiel einer opto-elektronischen Sende- und/oder Empfangsanordnung, bei der ein oberflächenmontierbares opto-elektronisches Bauelement unmittelbar auf einer Schaltungsplatine angeordnet ist und eine Lichtein- und/oder -auskopplung durch eine Aussparung in der Schaltungsplatine erfolgt;
- Figur 6a -: ein erstes Ausführungsbeispiel einer optoelektronischen Sende- und/oder Empfangsanordnung, bei der ein oberflächenmontierbares optoelektronisches Bauelement auf einer Schaltungsplatine angeordnet und eine Lichtkopplung mit einem in die Schaltungsplatine integrierten Lichtwellenleiter erfolgt;
- Figur 6b -: ein zweites Ausführungsbeispiel einer opto-elektronischen Sende- und/oder Empfangsanordnung, bei der ein oberflächenmontierbares opto-elektronisches Bauelement auf einer Schaltungsplatine angeordnet und optisch mit einem in die Schaltungsplatine integrierten Lichtwellenleiter gekoppelt ist; und
- Figur 6c -: ein drittes Ausführungsbeispiel einer opto-elektronischen Sende- und/oder Empfangsanordnung, bei der ein oberflächenmontierbares opto-elektronisches Bauelement auf einer Schaltungsplatine angeordnet und mit einem in die Schaltungsplatine integrierten Lichtwellenleiter gekoppelt ist.

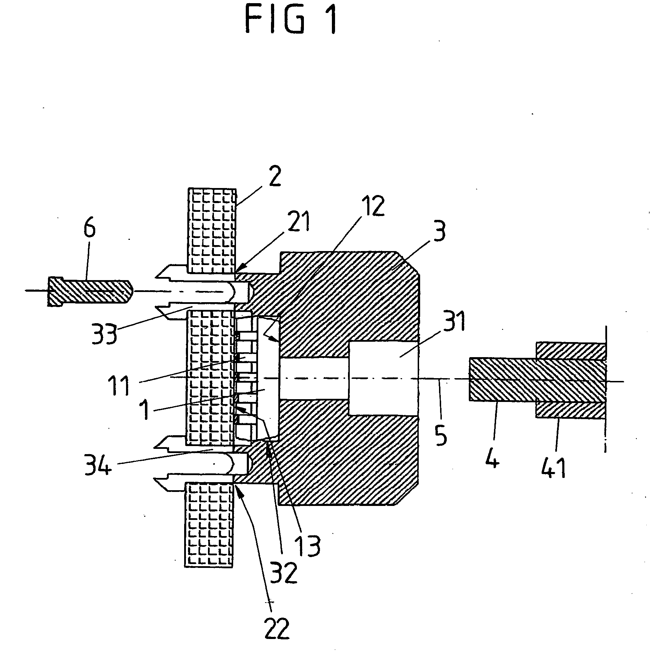

Die Schnittdarstellung der Figur 1 zeigt ein erstes Ausführungsbeispiel einer opto-elektronischen Sende- und/oder Empfangsanordnung. Die Anordnung weist ein oberflächenmontierbares opto-elektronisches Bauelement 1, eine Schaltungsplatine 2 und eine Haltevorrichtung 3 zur Aufnahme und Ausrichtung eines mit dem opto-elektronischen Bauelement 1 zu koppelnden Lichtwellenleiters 4 auf.

Das oberflächenmontierbare opto-elektronische Bauelement 1 ist durch einen spritzgegossenen Chip gebildet, in dem sich auf einem Leadframe ein opto-elektronischer Wandler, beispielsweise eine LED, eine Photodiode oder eine Laserdiode, gegebenenfalls mit zugehörigen elektrischen Bauteilen wie Treiberbaustein oder Vorverstärkerbaustein befindet. Das Bauelement 1 ist in SMD-Technik ausgeführt, d.h. oberflächenmontierbar. Hierzu weist es seitliche elektrische Kontaktbeinchen 11 des Leadframes auf. Die Kontaktierung kann jedoch auch in anderer Weise erfolgen, beispielsweise über Kontaktpads an der Unterseite des Bauelements 1.

Ein Kunststoffverguss beispielsweise aus einer Polymermasse bildet einen Kunststoffkörper und ein Gehäuse des Bauelements 1 aus. Der Kunststoffverguss kann dabei transparent sein, wobei eine Lichtein- oder -auskopplung durch den transparenten Kunststoff erfolgt. Alternativ ist der Verguss nicht transparent, wobei jedoch ein optisches Fenster zur Lichtein-/-auskopplung über dem eigentlichen opto-elektronischen Wandler angeordnet ist. Ein solches transparentes Fenster kann beispielsweise durch einen Saphir, ein transparentes Polymer oder Glas bereitgestellt werden.

Das Gehäuse des Bauelements kann grundsätzlich auch in anderer Weise als durch einen Kunststoffverguss gebildet sein.

Das Bauelement 1 weist eine der Schaltungsplatine 2 abgewandte Seite 12 und eine der Schaltungsplatine 2 zugewandte Seite 13 auf. Im dargestellten Ausführungsbeispiel erfolgt eine Lichtein- und/oder -auskopplung durch die der Schaltungsplatine 2 abgewandte Seite 12.

Das oberflächenmontierbare Bauelement 1 wird wie ein üblicher elektrischer Chip auf der Schaltungsplatine 2 angeordnet und kontaktiert. Neben einer elektrischen Kontaktierung des SMD-Bauelementes 1 erfolgt dabei ein Löten oder Kleben des Bauelements auf die Schaltungsplatine 2 über eine Chipklebeinsel. Die Chipklebeinsel befindet sich dabei bevorzugt benachbart des internen Leadframes des SMD-Bauelementes 1, so dass eine gute Wärmeableitung der im SMD-Bauteil entstehenden Wärme in die Schaltungsplatine 2 erfolgen kann.

Bei der Schaltungsplatine 2 handelt es sich um eine beliebig ausgebildete Leiterplatte (PCB) bzw. um ein so genanntes "Motherboard". Die Schaltungsplatine 2 bzw. Leiterplatte besteht aus einem Basismaterial insbesondere aus Kunststoff oder Keramik. Sie ist ein- oder zweiseitig mit Leiterbahnen versehen. Auch kann die Schaltungsplatine als Mehrebenen-Leiterplatte ausgebildet sein. Des weiteren können durch Einsatz der Dickschicht-Technologie, der Dünnschicht-Technologie oder Hybrid-Technologie elektrische Bauelemente oder Bauelemente der integrierten Optik in die Schaltungsplatine integriert sein. Die Darstellung der Figur 1 steht schematisch für beliebige Schaltungsplatinen.

Die Haltevorrichtung 3 weist eine Aufnahmeöffnung 31 mit zwei Bereichen unterschiedlichen Durchmessers zur Aufnahme und Ausrichtung des Lichtwellenleiters 4 auf, der von einer Hülse 41 umgeben ist. Die Haltevorrichtung 3 stellt einen Faseradapter dar, der die anzukoppelnde Lichtleitfaser 4 gegenüber dem oberflächenmontierbaren Bauteil 1 fixiert und auf die gemeinsame optische Achse 5 festlegt.

Die Haltevorrichtung 3 weist dabei auf der der Leiterplatte 2 zugewandten Seite eine Aussparung 32 auf, in der sich das Bauelement 1 befindet. Die Haltevorrichtung 3 ist gewissermaßen über das Bauelement 1 gestülpt. Die äußeren Abmessungen vom Bauelement 1 und Aufnahmeöffnung 32 sind dabei formschlüssig aufeinander abgestimmt, d.h. es liegen passive Justagestrukturen vor, die eine automatische Ausrichtung von Bauelement 1 und Haltevorrichtung 3 entlang der optischen Achse 5 bewirken.

Die Haltevorrichtung 3 ist fest in der Schaltungsplatine 2 verankert, wozu die Haltevorrichtung 3 Rastelemente 33, 34 ausbildet, die in Aussparungen 21, 22 der Schaltungsplatine 2 gesteckt und mittels eines Spreizkeils 6 dort gesichert sind.

Die Verankerung der Haltevorrichtung 3 in der Schaltungsplatine 2 weist den Vorteil auf, dass beim Stecken auftretende Kräfte von der stabilen Leiterpatte 2 aufgenommen werden.

Die Montagereihenfolge der in Figur 1 dargestellten Anordnung kann in zwei Varianten realisiert sein. In der ersten Variante wird zunächst das Bauteil 1 auf die Schaltungsplatine 2 gelötet. Anschließend wir die Halevorrichtung 3 aufgesetzt. Nach Einstecken des Lichtwellenleiters 4 in die Aufnahme 31 der Haltevorrichtung 3 ist die Anordnung funktionsbereit.

In einer zweiten Montagevariante wird zunächst das SMD-Bauelement 1 in die Haltevorrichtung 3 eingesetzt, so dass Bauelement 1 und Haltevorrichtung 3 eine Einheit darstellen, die an einen Kunden auslieferbar ist. Die Einheit von Bauelement 1 und Haltevorrichtung 3 ist dabei wiederum oberflächenmontierbar. Beim Kunden erfolgt dann das Aufsetzen und Verankern der Anordnung 1, 3 auf der Schaltungsplatine 2 und der Lötvorgang.

Der Vorteil dieser Montagevariante besteht darin, dass das beim Lötprozess in gewissem Maße bewegliche SMD-Bauelement 1, sich auf der Schaltungsplatine 2 ausrichtet, so dass weniger Kräfte von der Haltevorrichtung 3 auf das Bauelement 1 ausgeübt werden und auftretende Kräfte in erster Linie auf die Schaltungsplatine 2 wirken. Allerdings ist diese Montagereihenfolge nur möglich, wenn die Haltevorrichtung 3 den Löttemperaturen Stand hält.

Die Art der optischen Ankopplung des Lichtwellenleiters 4 an die Haltevorrichtung 3 ist in der Figur 1 nur beispielhaft dargestellt. Beispielsweise ist es ebenfalls möglich, dass in die Haltevorrichtung 3 ein nacktes Faserende 4 eingesteckt und befestigt wird (Pigtail-Ausführung). Ebenso ist es grundsätzlich möglich, dass das Faserende in einem rastbaren optischen Stecker endet, der dann in eine Steckeraufnahme eingesteckt wird, die in der Haltevorrichtung 3 integriert ist.

Des weiteren kann unabhängig von der Art der Steckverbindung vorgesehen sein, dass zwischen der Stirnfaser der anzukoppelnden Lichtleitfaser 4 und dem Lichtaustrittsfenster bzw. optischen Fenster des SMD-Bauelementes 1 ein Lichtformungselement angeordnet ist, beispielsweise eine Linse.

Bei dem anzukoppelnden Lichtwellenleiter 4 kann es sich um ein POF (plasic optic fiber)-Faser oder eine Glasfaser (Monomode oder Multimode) handeln.

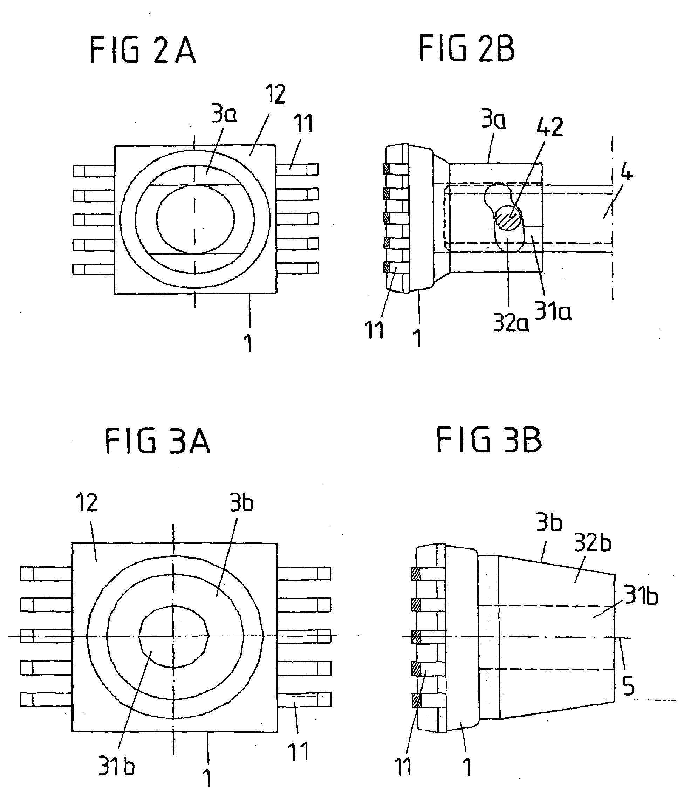

Die Figuren 2a, 2b zeigen eine alternative Ausgestaltung einer opto-elektronischen Sende- und/oder Empfangsanordnung, bei der die Haltevorrichtung 3a nicht wie in der Figur 1 auf der Schaltungsplatine 2 verankert ist, sondern auf dem SMD-Bauelement 1 befestigt ist.

In der Figur 2a ist das SMD-Bauelement 1 mit den Kontaktbeinchen 11 und der der Schaltungsplatine 2 abgewandten Oberfläche 12 zu sehen. Auf die Oberfläche 12 ist die Haltevorrichtung 3a dauerhaft aufgebracht, z. B. geklebt oder angespritzt. Die Haltevorrichtung 3a wird dabei auf eine bestimmte Referenzgeometrie, z. B. die Kante des SMD-Bauelementes 1 ausgerichtet.

In dem Ausführungsbeispiel der Figur 2a, 2b ist vorgesehen, dass eine anzukoppelnde Lichtleitfaser 4 verrastbar mit der Haltevorrichtung 3a verbunden ist. Hierzu weist die Haltevorrichtung 3a eine längliche Aussparung 32a mit zueinander versetzten Endbereichen auf, in die ein seitlich abstehender Pin der Lichtleitfaser 4 durch Drehen verrastbar bzw. entrastbar ist. Der in Figur 2b dargestellte Bajonettverschluss ist jedoch allein beispielhaft zu verstehen.

Ebenso kann vorgesehen sein, dass die Faser 4 unlösbar in der Haltevorrichtung 3a angeordnet ist, beispielsweise durch Kleben oder Schweißen.

Das Ausführungsbeispiel der Figuren 3a, 3b zeigt ebenfalls eine opto-elektronische Sende- und/oder Empfangsanordnung, bei der die Haltevorrichtung 3b auf die Oberfläche 12 des SMD-Bauteils 1 unlösbar aufgebracht ist. Das Material der sich an die zentrale Bohrung 31b anschließenden Wandung 32b der Haltevorrichtung 3b ist in diesem Ausführungsbeispiel bevorzugt elastisch. Gleichzeitig weist die Bohrung 31b einen geringfügig geringeren Durchmesser als eine einzuführende Lichtleitfaser auf. Beim Einführen der Lichtleitfaser in die Öffnung 31b wird die elastische Wandung 32b leicht deformiert, so dass die Lichtleitfaser kraftschlüssig aufgenommen ist. Ebenso kann jedoch vorgesehen sein, dass die Faser leicht in die Aufnahmeöffnung 31b einführbar ist, wobei die Faser in diesem Fall bevorzugt in die Öffnung 31b eingeklebt wird.

Bei den Ausführungsbeispielen den Figuren 2 und 3 müssen sämtliche, beim Stecken auftretende Kräfte über den Körper des Bauelementes 1 abgeleitet werden. Die Kräfte werden über die Chipklebeinsel und die Beinchen 11 auf die Platine 2 geführt.

SMD-Bauelement 1 und Haltevorrichtung 3a, 3b stellen eine unlösbar verbundene Einheit dar, die wiederum ein SMD-Bauteil bilden. Die vormontierte Einheit kann an einen Kunden geliefert werden, der dann das Aufsetzen auf die Schaltungsplatine und den Lötvorgang ausführt.

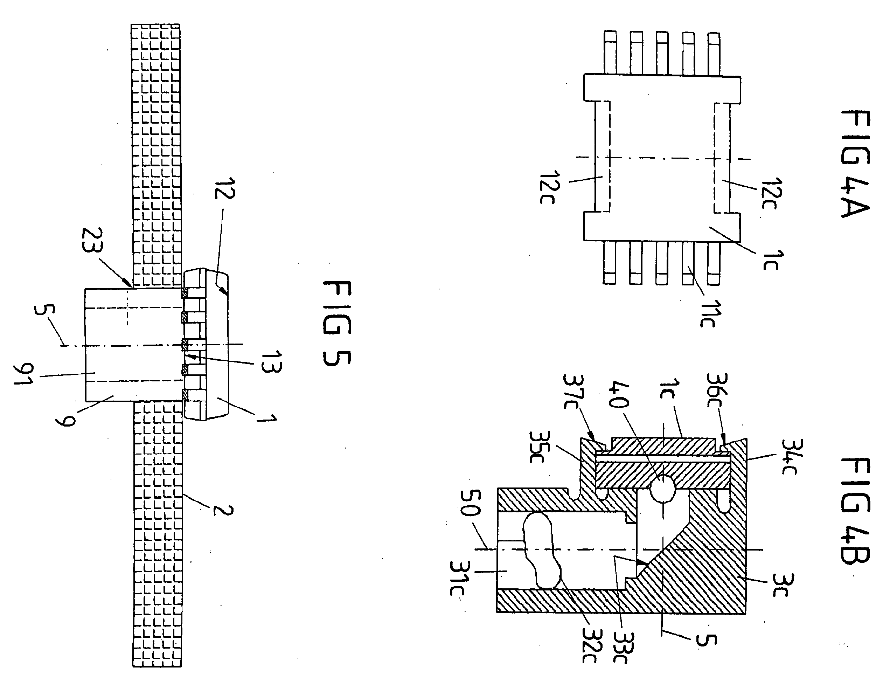

Die Figuren 4a, 4b zeigen ein weiteres Ausführungsbeispiel einer opto-elektronischen Sende- und/oder Empfangsanordnung. Das besondere an dieser Ausführungsform ist, dass das SMD-Bauelement und die Haltevorrichtung rastbar miteinander verbindbar sind. Hierzu ist das Gehäuse des SMD-Bauelements 1c derart geformt, dass auf der Unterseite ein Vorsprung 12c ausgebildet ist. Die Haltevorrichtung 3c weist seitliche, rastbare Arme 34c, 35c auf, die Nasen 36c, 37c ausbilden, die zur rastbaren Verbindung hinter dem Rastvorsprung 12c des SMD-Bauelementes 1c zur Anlage kommen.

Bei dem Ausführungsbeispiel der Figur 4b ist zusätzlich vorgesehen, dass der Aufnahmebereich 31c zur Ankopplung eines Lichtwellenleiters nicht wie in den vorherigen Ausführungsbeispielen parallel zur optischen Achse des Bauelementes 1 verläuft, sondern in einem Winkel hierzu. Im Ausführungsbeispiel der Figur 4b verläuft der Aufnahmebereich 31c parallel zu einer Schaltungsplatine, auf die das SMD-Bauelement 1c aufgelötet wird. Zum Umlenken des entlang der Achse 50 eingekoppelten Lichtes auf die Achse 5 des Bauelementes 1 ist eine schräg verlaufende Umlenkfläche 33c vorgesehen, die zusätzlich verspiegelt sein kann. Zur Verbesserung der Lichtkopplung ist des weiteren ein lichtformendes Element in Form einer Linse 40 in die eine Oberfläche des SMD-Bauteils 1c integriert.

Eine längliche Öffnung 32c in der Wandung der Haltevorrichtung 3c dient der rastbaren Verbindung mit einem Lichtwellenleiter entsprechend der Ausgestaltung der Figur 2b. Natürlich kann die Ausgestaltung der Figur 4b auch ohne eine solche Öffnung 32c ausgeführt sein.

Die äußeren Konturen von SMD-Bauelement 1c und rastbarer Haltevorrichtung 3c sind auf einander abgestimmt, so dass eine passive Justage bei dem Verrasten erfolgt.

Die Figur 5 zeigt eine Ausgestaltung einer opto-elektronischen Sende- und/oder Empfangsanordnung, bei der eine Lichtein- oder -auskopplung in bzw. aus dem opto-elektronischen Bauelement 1 in Richtung einer Aussparung 23 erfolgt, die in der Schaltungsplatine 2 unterhalb des Bauelements 1 ausgebildet ist. Die Aussparung ist dabei bevorzugt kreisförmig oder viereckig und auf die optische Achse 5 des Bauelementes 1 zentriert.

Zur Realisierung einer Lichtein- oder -auskopplung an der Unterseite 13 des SMD-Bauelements 1 ist in der Chipklebeinsel (nicht dargestellt) ein optischer Zugang im Kunststoffgehäuse ausgebildet. Dieser kann in ähnlicher Weise wie ein optischer Zugang an der Oberseite 12 des Bauelementes durch einen Saphir, ein transparentes Polymer oder Glas bereitgestellt werden.

Das entlang der optischen Achse 5 senkrecht nach unten ein- oder ausgekoppelte Licht wird in einen Lichtwellenleiter (nicht dargestellt) ein- bzw. ausgekoppelt. Zur Aufnahme eines solchen Lichtwellenleiters ist im dargestellten Ausführungsbeispiel eine Hülse 9 in die Aussparung 23 der Schaltungsplatine eingesteckt, die als Faserhaltevorrichtung dient und zentrisch eine Aufnahmeöffnung zur Ankopplung einer Lichtleitfaser aufweist. Eine Lichtkopplung erfolgt unmittelbar zwischen der Stirnfläche der Lichtleitfaser und dem optischen Fenster an der Unterseite 13 des SMD-Bauteils 1.

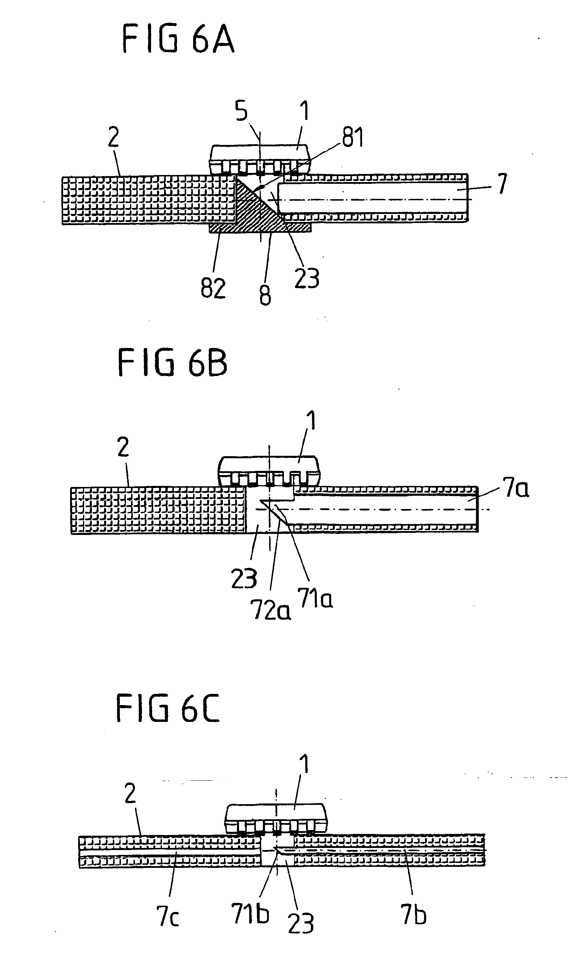

In den Ausgestaltungen der Figuren 6a bis 6c ist ein SMD-Bauelement ähnlich wie in Figur 5 mit seinem optischen Fenster in Richtung der Schaltungsplatine 2 auf der Schaltungsplatine 2 angeordnet. Unterhalb des SMD-Bauelementes 1 und in zentrischer Anordnung zu dessen optischer Achse 5 ist wieder eine Aussparung in der Schaltungsplatine 2 ausgebildet. Eine Lichtein- und/oder - auskopplung erfolgt jedoch nicht senkrecht zur Ebene der Schaltungsplatine 2. Ein Lichtwellenleiter, der optisch mit dem Bauelement 1 zu koppeln ist, ist bei diesen Ausführungsbeispielen vielmehr in die Schaltungsplatine 2 selbst integriert.

Beim Ausführungsbeispiel 6a ist in die Schaltungsplatine 2 eine POF-Faser 7 integriert. Die POF-Faser 7 ist beispielsweise in eine V-Nut in der Oberfläche des Schaltungsplatine 2 eingelegt, die beispielsweise durch Fräsen der Schaltungsplatine bereit gestellt wird. Nach Einlegen der POF-Faser wir die Nut mit einem Vergussmaterial abgedeckt. Ebenso ist des denkbar, die POF-Faser in die Schaltungsplatine einzupressen, insbesondere, wenn diese aus einem Kunststoffmaterial besteht und das Einpressen erfolgt, bevor das Kunststoffmaterial vollständig ausgehärtet ist.

In gleicher Weise könnte eine Glasfaser statt der POF-Faser 7 in die Schaltungsplatine 2 eingebracht sein.

Zur Lichtkopplung zwischen der POF-Faser 7 und SMD-Bauelement 1 ist in die Aussparung 23 ein Umlenkteil 8 mit einer unter einem Winkel von 45° zur optischen Achse 5 verlaufenden schrägen Fläche 81 eingeführt und mit Flanschbereichen 82 auf der Unterseite der Schaltungsplatine 2 befestigt. Das Umlenkteil 8 ermöglicht eine direkte Lichtkopplung zwischen der POF-Faser 7 und dem Bauelement 1. Die Schräge 81 kann zusätzlich verspiegelt sein.

Die Figur 6b kommt ohne ein gesondertes Umlenkteil 8 aus. Stattdessen ist ein in die Aussparung 23 hineinragende Bereich 71a der POF-Faser 7a keilförmig derart ausgebildet, dass das Licht an einer unter einem Winkel von 45° verlaufenden Stirnfläche 72a in den Kern der POF-Faser bzw. in Richtung des SMD-Bauelementes 1 gekoppelt wird. Ein entsprechender Keil 71a kann bereits bei der Herstellung der POF-Faser 7a bereitgestellt werden.

Bei dem Ausführungsbeispiel der Figur 6c ist in die Schaltungsplatine 2 integriert optisch ein Lichtwellenleiter 7b eingebracht. Hierzu werden beispielsweise in das Material der Schaltungsplatine 2 Rillen eingebracht, diese mit dem Kernmaterial des Lichtwellenleiters teilweise gefüllt und die Rillen anschließend mit dem Material der Schaltungsplatine, dass den Mantel der Lichtwellenleiter bildet, wieder aufgefüllt. Der Querschnitt des Lichtwellenleiters 7b ist beispielsweise rechteckig oder quadratisch. Eine Lichtein- bzw. -auskopplung erfolgt wieder über einen in die Aussparung 23 hineinragenden keilförmigen Bereich 71b entsprechend der Anordnung der Figur 6b.

In dem Schaltungsträger 2 kann sich angrenzend an die Aussparung 23 ein weiterer Lichtwellenleiter 7c anschließen, wobei vorgesehen sein kann, dass das Licht nur teilweise oder nur für eine bestimmte Wellenlänge aus dem Lichwellenleiter 7b in das SMD-Bauelement 1 ausgekoppelt wird.

Es wird darauf hingewiesen, dass insbesondere bei den Ausführungsbeispielen der Figur 6a bis 6c die in den SMD-Bauelementen angeordneten Wandler als Array opto-elektronischer Wandler ausgebildet sein können, denen jeweils ein Datenkanal zugeordnet ist. Dementsprechend ist in der Schaltungsplatine 2 für jeden Datenkanal ein Lichtwellenleiter 7, 7a, 7b vorgesehen, wobei die einzelnen Lichtwellenleiter in paralleler Anordnung in der Schaltungsplatine angeordnet sind.

Sämtliche beschriebenen Ausführungsbeispiele erlauben eine kostengünstige mechanisch und optische Kopplung eines Lichtwellenleiters mit einem Standard-SMD-Bauelement, welches mindestens einen opto-elektronischen Wandler enthält. Sofern ein anzukoppelnder Lichtwellenleiter mittels einer Haltevorrichtung mit dem SMD-Bauelement verbindbar ist, bildet die Einheit von SMD-Bauelement und Haltevorrichtung bevorzugt wiederum einem SMD-Komponente. Die Kombination von SMD-Bauelement und Haltevorrichtung ist dadurch hochautomatisierbar und leicht auf bestehende SMD-Bestückungs-Fertigungslinien übertragbar.

## Patentansprüche

1. Optoelektronische Sende- und/oder Empfangsanordnung mit
- einem oberflächenmontierbaren opto-elektronischen Bauelement (1),
- einer Haltevorrichtung (3, 3a, 3b, 3c) zur Aufnahme und Ausrichtung eines mit dem opto-elektronischen Bauelement (1) zu koppelnden Lichtwellenleiters (4) und
- einer mit elektrischen Leitungen versehenen Schaltungsplatine (2), auf der das opto-elektronische Bauelement (1) oberflächenmontiert ist, wobei
- die optische Achse (5) des opto-elektronischen Bauelements (1) senkrecht zur Ebene der Schaltungsplatine (2) verläuft und
- die Haltevorrichtung (3, 3a, 3b, 3c) sich an die der Schaltungsplatine (2) abgewandte Seite (12) des opto-elektronischen Bauelements (1) anschließt.

2. Anordnung nach Anspruch 1, **dadurch gekennzeichnet, dass** die Haltevorrichtung (3, 3a, 3b, 3c) eine Aufnahmeöffnung (31, 31a, 31b, 31c) für einen Lichtwellenleiter (4) aufweist, die zumindest teilweise parallel zur optischen Achse (5) des opto-elektronischen Bauelements (1) verläuft.

3. Anordnung nach Anspruch 2, **dadurch gekennzeichnet, dass** die Aufnahmeöffnung (31, 31a, 31b, 31c) sich bis an die der Schaltungsplatine (2) abgewandte Seite (12) des opto-elektronischen Bauelements (1) erstreckt, so dass ein eingesteckter Lichtwellenleiter (4) unmittelbar an der entsprechenden Seite (12) des optoelektronischen Bauelements (1) zur Anlage kommt.

4. Anordnung nach mindestens einem der vorangehenden Ansprüche, **dadurch gekennzeichnet, dass** ein anzukoppelnder Lichtwellenleiter (4) über eine vorher angebrachte Hülse (41) an der Haltevorrichtung (3) befestigt ist.

5. Anordnung nach mindestens einem der vorangehenden Ansprüche, **dadurch gekennzeichnet, dass** das oberflächenmontierbare opto-elektronische Bauelement (1) ein Gehäuse mit passiven Justagestrukturen aufweist, die mit entsprechenden passiven Justagestrukturen (32) der Haltevorrichtung (3) zusammenwirken.

6. Anordnung nach mindestens einem der vorangehenden Ansprüche, **dadurch gekennzeichnet , dass** die Haltevorrichtung (3) in der Schaltungsplatine (2) verankert oder mit dieser verklebt oder an diese angespritzt ist.

7. Anordnung nach Anspruch 6, **dadurch gekennzeichnet, dass** die Haltevorrichtung (3) über Spreizteile (33, 34) form- und/oder kraftschlüssig in der Schaltungsplatine (2) verankert ist.

8. Anordnung nach mindestens einem der Ansprüche 1 bis 5, **dadurch gekennzeichnet, dass** die Haltevorrichtung (3a, 3b, 3c) an dem Gehäuse des opto-elektronischen Bauelements (1) befestigt ist.

9. Anordnung nach Anspruch 8, **dadurch gekennzeichnet, dass** das opto-elektronische Bauelement Raststrukturen (12c) aufweist, die eine Verrastung der Haltevorrichtung (3c) am opto-elektronischen Bauelement (1c) ermöglichen.

10. Anordnung nach Anspruch 8, **dadurch gekennzeichnet, dass** die Haltevorrichtung (3a, 3b) an das Gehäuse des opto-elektronischen Bauelements (1) aufgeklebt oder aufgespritzt ist.

11. Anordnung nach mindestens einem der vorangehenden Ansprüche, **dadurch gekennzeichnet, dass** die Haltevorrichtung Rastmittel (32a, 32c) aufweist, die eine Verrastung eines Lichtwellenleiters (4) in der Haltevorrichtung (3a, 3c) ermöglichen.

12. Anordnung nach mindestens einem der vorangehenden Ansprüche, **dadurch gekennzeichnet, dass** die Haltevorrichtung (3b) eine elastische Wand (32b) aufweist, die einen anzukoppelnden Lichtwellenleiter kraftschlüssig aufnimmt.

13. Anordnung nach mindestens einem der vorangehenden Ansprüche, **dadurch gekennzeichnet, dass** die Haltevorrichtung (3c) einen Aufnahmebereich (31c) für einen Lichtwellenleiter aufweist, der unter einem Winkel zur optische Achse (5) des opto-elektronischen Bauelements (1c) verläuft, sowie integrierte Umlenkmittel (33c), durch die das einzukoppelnde Licht auf die optische Achse (5) des opto-elektronischen Bauelements (1c) umgelenkt wird.

14. Anordnung nach Anspruch 13, **dadurch gekennzeichnet, dass** der Aufnahmebereich (31c) parallel zur Schaltungsplatine verläuft und die integrierten Umlenkmittel (33c) das Licht um 90° umlenken.

15. Anordnung nach mindestens einem der vorangehenden Ansprüche, **dadurch gekennzeichnet, dass** die Verbindung von opto-elektronischem Bauelement (1) und Haltevorrichtung (3, 3a, 3b, 3c) vormontierbar ist und wiederum eine oberflächenmontierbare Komponente darstellt.

16. Anordnung nach mindestens einem der vorangehenden Ansprüche, **dadurch gekennzeichnet, dass** die elektrische Anbindung des oberflächenmontierbaren opto-elektronischen Bauelements (1) an die Schaltungsplatine (2) entsprechend dem SMD-Standard erfolgt.

17. Anordnung nach mindestens einem der vorangehenden Ansprüche, **dadurch gekennzeichnet, dass** in das oberflächenmontierbare opto-elektronische Bauelement (1c) und/oder die Haltevorrichtung ein lichtveränderndes Element, insbesondere eine Linse (40) oder ein Filterglas integriert ist.

18. Optoelektronische Sende- und/oder Empfangsanordnung mit
- einem oberflächenmontierbaren opto-elektronischen Bauelement (1),
- einer mit elektrischen Leitungen versehenen Schaltungsplatine (2), auf der das opto-elektronischen Bauelement (1) oberflächenmontiert ist, wobei
- die optische Achse (5) des opto-elektronischen Bauelements (1) senkrecht zur Ebene der Schaltungsplatine (2) verläuft, und wobei
- die Schaltungsplatine (2) eine Aussparung (23) aufweist und eine Lichtein- oder auskopplung in bzw. aus dem opto-elektronischen Bauelement (1) in Richtung der Aussparung (23) der Schaltungsplatine (2) erfolgt.

19. Anordnung nach Anspruch 18, **dadurch gekennzeichnet, dass** in der Aussparung (23) ein Lichtwellenleiter angeordnet ist, in den Licht ein- oder ausgekoppelt wird.

20. Anordnung nach Anspruch 19, **dadurch gekennzeichnet, dass** der Lichtwellenleiter unmittelbar an der der Schaltungsplatine (2) zugewandten Seite (13) des opto-elektronischen Bauelements (1) zur Anlage kommt.

21. Anordnung nach Anspruch 19 oder 20, **dadurch gekennzeichnet, dass** der Lichtwellenleiter in einer Vorrichtung, insbesondere einer Hülse (9) angeordnet ist, die in die Aussparung (23) der Schaltungsplatine (2) eingesetzt ist.

22. Anordnung nach Anspruch 18, **dadurch gekennzeichnet, dass** die Schaltungsplatine (2) mindestens ein Lichtwellenleiter (7, 7a, 7b) enthält und in der Aussparung (23) der Schaltungsplatine (2) Mittel (8, 71a, 71b) zum Umlenken des Licht um 90° angeordnet sind.

23. Anordnung nach Anspruch 22, **dadurch gekennzeichnet, dass** die Umlenkmittel durch ein Einsteckteil (8) mit einer schräg verlaufenden Fläche (81) gebildet sind, das in die Aussparung (23) der Schaltungsplatine (2) eingesteckt ist.

24. Anordnung nach Anspruch 22, **dadurch gekennzeichnet, dass** die Umlenkmittel an einem in die Aussparung (23) der Schaltungsplatine (2) hineinragenden Bereich (71a, 71b) des entsprechenden Lichtwellenleiters (7a, 7b) ausbildet sind.

25. Anordnung nach Anspruch 24, **dadurch gekennzeichnet, dass** die Umlenkmittel durch eine schrägverlaufende Stirnfläche (72a) des Lichtwellenleiters (7a, 7b) gebildet sind.

26. Anordnung nach mindestens einem der Ansprüche 22 bis 25, **dadurch gekennzeichnet**, das der Lichtwellenleiter (7, 7a) in eine Nut der Schaltungsplatine (2) eingebracht ist.

27. Anordnung nach mindestens einem der Ansprüche 22 bis 25, **dadurch gekennzeichnet**, das der Lichtwellenleiter (8a, 7a) in die Schaltungsplatine (2) eingepresst ist.

28. Anordnung nach mindestens einem der Ansprüche 22 bis 25, **dadurch gekennzeichnet**, das der Lichtwellenleiter (7b) ein in die Schaltungsplatine (2) integrierter wellenleitender Kanal ist.

29. Anordnung nach mindestens einem der vorangehenden Ansprüche, **dadurch gekennzeichnet, dass** das oberflächenmontierbare opto-elektronische Bauelement (1) eine Sendevorrichtung, insbesondere eine Laserdiode oder eine Leuchtdiode, und/oder eine Empfangsvorrichtung, insbesondere eine Photodiode aufweist, die in einem SMD-Chip angeordnet sind.

30. Anordnung nach mindestens einem der vorangehenden Ansprüche, **dadurch gekennzeichnet, dass** das oberflächenmontierbare opto-elektronische Bauelement (1) zusätzlich elektrische Komponenten wie eine Treibervorrichtung, einen Vorverstärker oder Kondensatoren aufweist.
